(19) Europäisches Patentamt
European Patent Office
Office européen des brevets

(11) **EP 4 589 082 A1**

(12) **EUROPEAN PATENT APPLICATION**
published in accordance with Art. 153(4) EPC

(43) Date of publication:
**23.07.2025 Bulletin 2025/30**

(21) Application number: **23865372.9**

(22) Date of filing: **06.09.2023**

(51) International Patent Classification (IPC):
***E02F 9/26*** ***(2006.01)***

(52) Cooperative Patent Classification (CPC):
**E02F 9/26**

(86) International application number:
**PCT/JP2023/032447**

(87) International publication number:
**WO 2024/058017 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 JP 2022148360**

(71) Applicant: **Hitachi Construction Machinery Co., Ltd.**
**Tokyo 110-0015 (JP)**

(72) Inventors:
• **NAKAMURA, Yusuke**
  **Tokyo 100-8280 (JP)**
• **YAMAGUCHI, Keita**
  **Tokyo 100-8280 (JP)**
• **KAWAMURA, Ichirou**
  **Tokyo 100-8280 (JP)**
• **KUWATA, Junichi**
  **Tokyo 100-8280 (JP)**
• **ITO, Hideaki**
  **Tsuchiura-shi, Ibaraki 300-0013 (JP)**
• **ISHIMOTO, Hidefumi**
  **Tsuchiura-shi, Ibaraki 300-0013 (JP)**
• **SATO, Kei**
  **Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

(54) **IMAGE GENERATION DEVICE AND OPERATION ASSISTANCE SYSTEM**

(57) The present invention aims to provide remote operation support technology that allows a remote operator to easily and quickly grasp the state of a work machine based on its machine information and environment information. The image generation device according to the present invention generates an AR image indicating the machine information and the environment information based on the machine information representing the state of the work machine and the environment information representing the state of the surrounding environment of the work machine, and places the AR image representing the machine information at the position indicated by the machine information or places the AR image representing the environment information at the position indicated by the environment information (see Figure 4).

FIG. 4

## Description

Technical Field

The present invention relates to a technology for generating images used to assist operators in remotely controlling work machines.

Background Art

Technologies for remotely operating work machines such as hydraulic excavators have been developed. The work machine is equipped with an imaging device that captures the surrounding environment, and by transmitting the captured images to a remote control room, the remote control room can obtain images as seen from the operation room of the work machine. The remote operator uses these images to remotely control the work machine.

The following Patent Document 1 describes the following (see abstract). 'To provide a technology that allows operators to comfortably remotely control work machines and suppress a decrease in work efficiency.' is the problem to be solved. The technology to solve this problem is, 'The display system is mounted on a work machine with a working device and includes a target image generation section that generates a target image showing a virtual viewpoint image of the target as seen from a virtual viewpoint outside the work machine, based on detection data from a distance detection device that detects the distance to the target around the work machine. Additionally, it includes a work machine image generation section that generates a work machine image showing a virtual viewpoint image of the work machine as seen from a virtual viewpoint, based on detection data from a posture detection device mounted on the work machine. It also includes a synthesis section that generates a composite image by superimposing the target image and the work machine image. Furthermore, it includes a display control section that simultaneously displays the real image captured by the imaging device mounted on the work machine and the composite image on a display device located outside the work machine.'

Citation List

Patent Literature

Patent Literature 1: JP 2019-054464 A

Summary of Invention

Technical Problems

When remotely operating a work machine, both machine information representing the state of the work machine and environmental information representing the state of the surrounding environment are required. However, the necessary information varies depending on the work performed by the work machine. Moreover, it is desirable not just to display machine information or environmental information at arbitrary positions on the remote control screen, but to enable the remote operator to easily and quickly grasp the state of the work machine based on that information. In conventional technologies like Patent Document 1, although machine information and environmental information are displayed on the remote control screen, sufficient consideration has not necessarily been given to enabling the remote operator to easily and quickly grasp the state of the work machine.

The present invention has been made in view of the above problems, and aims to provide a remote operation support technology that allows a remote operator to easily and quickly grasp the state of the work machine based on machine information and environmental information.

Solution to Problem

The image generation device according to the present invention generates an AR image indicating machine information representing the state of the work machine and environmental information representing the state of the surrounding environment, and places the AR image representing the machine information at the position indicated by the machine information or places the AR image representing the environmental information at the position indicated by the environmental information.

Advantageous Effects of Invention

According to the image generation device of the present invention, a remote operator can easily and quickly grasp the state of the work machine based on the machine information and environmental information. Other problems, configurations, and advantages of the present invention will become apparent from the following description of embodiments.

Brief Description of Drawings

Figure 1 is a schematic diagram showing the surrounding environment of a work machine 100 according to Embodiment 1.

Figure 2 is a top view showing the imaging range of sensors S1 to S3.

Figure 3 is a schematic diagram showing the configuration of a remote control room 300.

Figure 4 is a block diagram showing the configuration of an image generation device 103.

Figure 5 is a functional block diagram of the image generation device 103 when not generating free viewpoint images.

Figure 6 is a functional block diagram of the operation control device 305.

Figure 7 is a flowchart explaining the procedure for generating free viewpoint images by the image generation device 103.

Figure 8 is a flowchart explaining the procedure for generating normal images by the image generation device 103.

Figure 9 is an example of a dot pattern used in calibration during the coordinate system integration process performed by the coordinate system processing section 1031.

Figure 10 is a schematic diagram explaining Calibration 2.

Figure 11 is a schematic diagram explaining Calibration 3.

Figure 12 shows the coordinate system used when generating free viewpoint images.

Figure 13 shows examples of images generated by the image generation device 103 for each viewpoint.

Figure 14 shows examples of images generated by the image generation device 103 for each viewpoint.

Figure 15 shows examples of images generated by the image generation device 103 for each viewpoint.

Figure 16 is an example of a display when colors are applied to boom 111 to bucket 113 in the images generated by the image generation device 103.

Figure 17 is an example of a display when colors are applied to boom 111 to bucket 113 in the images generated by the image generation device 103.

Figure 18 is an example of a display when colors are applied to boom 111 to bucket 113 in the images generated by the image generation device 103.

Figure 19 is an example of a surrounding environment image of the work machine 100 generated by the image generation device 103.

Figure 20 is an example of a surrounding environment image of the work machine 100 generated by the image generation device 103.

Figure 21 is an example of a surrounding environment image of the work machine 100 generated by the image generation device 103.

Figure 22 is an example of an image showing the movement range of the swing body 102 generated by the image generation device 103.

Figure 23 is another example of an image showing the movement range of the swing body 102 generated by the image generation device 103.

Figure 24 is an example of an image warning of undermining generated by the image generation device 103.

Figure 25 is a functional block diagram of the image generation device 103 according to Embodiment 4.

Figure 26 is a functional block diagram of the image generation device 103 when not generating free viewpoint images.

Figure 27 is a state transition diagram of the work machine 100.

Figure 28 is an example of a threshold that triggers switching of free viewpoint images.

Figure 29 shows a modification of the image generation device 103.

Figure 30 is a functional block diagram of the operation control device 305.

Figure 31 shows a modification of the image generation device 103.

Figure 32 is a configuration diagram of the operation room OR.

Description of Embodiments

<Embodiment 1>

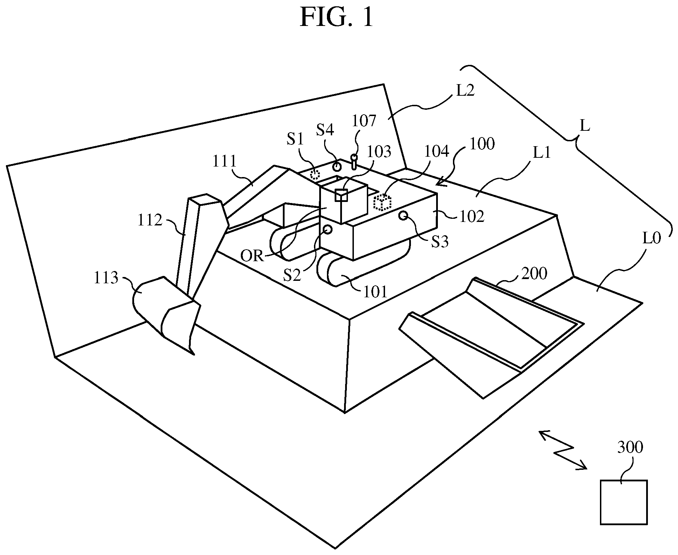

Figure 1 is a schematic diagram showing the surrounding environment of a work machine 100 according to Embodiment 1 of the present invention. In this example, the work machine 100 is a hydraulic excavator. The work machine 100 includes a travel body 101, a swing body 102, an operation room OR, and a working device (described later as 111 to 113). The work machine 100 is connected to a remote control room 300 via a communication device 104. The working device is composed of a boom 111, an arm 112, and a bucket 113. Sensors S1, S2, S3, and S4 are arranged on the right side, front, left side, and top of the swing body 102, respectively. An image generation device 103 is arranged inside the operation room OR. Antenna 107 communicates with the remote control room 300 via wireless communication.

Sensors S1 to S3 can image the range described later. Sensor S4 is a sensor that detects machine information of the work machine 100 (e.g., the posture of the work machine 100). Sensors S1 to S3 can also be configured as sensors combining LiDAR (3D measurement device) and cameras. LiDAR is a device that measures the 3D distance between the surrounding environment and the work machine 100 by emitting laser light. Hereinafter, it is assumed that sensors S1 to S3 are configured by combining cameras and LiDAR, thereby acquiring environmental information around the work machine 100.

The work machine 100 performs excavation work in the work environment L. The work environment L is composed of a flat land L0, a plateau L1, and a slope L2. The work machine 100 loads the earth and sand collected in the bucket 113 during excavation work into a dump truck 200.

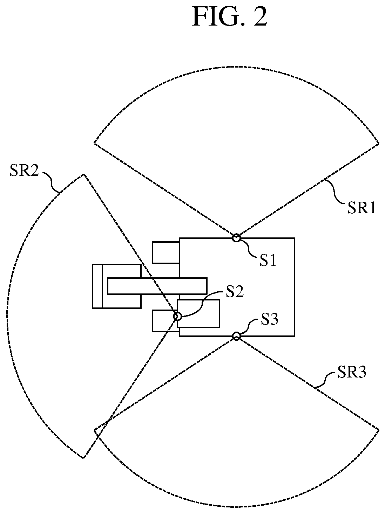

Figure 2 is a top view showing the imaging range of sensors S1 to S3. Sensor S1 is arranged on the right side of the swing body 102, sensor S2 is arranged on the front of the swing body 102, and sensor S3 is arranged on the left side of the swing body 102. Sensors S1 to S3 can image the arc-shaped imaging ranges SR1 to SR3, as shown in Figure 2. These sensors can obtain images of the work machine 100 and the surrounding environment of the work machine 100. The measurement range by LiDAR is also similar to that shown in Figure 2.

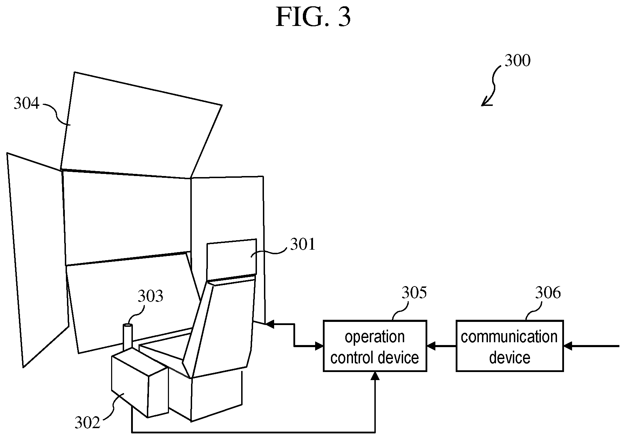

Figure 3 is a schematic diagram showing the configuration of the remote control room 300. The remote control room 300 includes a driver's seat 301, an operating device 302, an input device 303, a display 304, an operation control device 305, and a communication device 306. The communication device 306 acquires images generated by the image generation device 103 through communication. The operation control device 305 displays the image on the display 304. The remote operator inputs operation instructions using the input device 303 while viewing the image. The operating device 302 transmits the operation instructions to the work machine 100 via the operation control device 305 and the communication device 306. The work machine 100 operates according to the operation instructions. The image generation device 103 and the remote control room 300 can be configured as an operation support system to assist in the operation of the work machine 100.

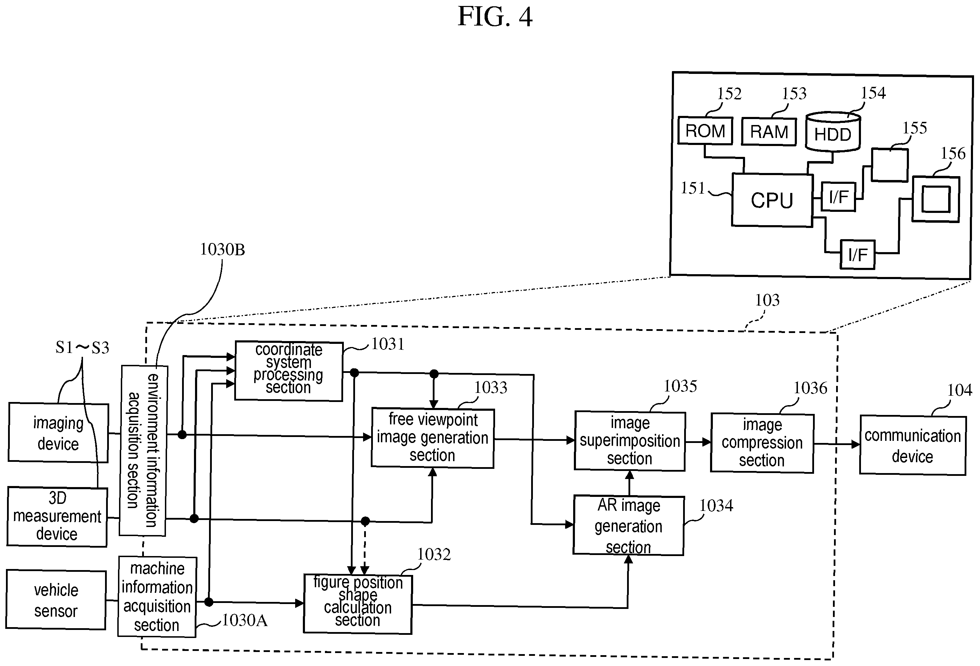

Figure 4 is a block diagram showing the configuration of the image generation device 103. The image generation device 103 is a device that integrates measurement data obtained by each sensor provided in the work machine 100 and transmits it as an image to the remote control room 300. The image generation device 103 acquires measurement results from sensors S1 to S3 (imaging devices and 3D measurement devices) and vehicle sensors. The vehicle sensor is a sensor that measures the state of the work machine (e.g., internal pressure). S4 is also one of the vehicle sensors. The processing of each part provided in the image generation device 103 will be described below.

The machine information acquisition section 1030A and the environment information acquisition section 1030B respectively acquire data (measurement data) describing the results measured by each sensor from the respective sensors. The same role as the machine information acquisition section 1030A and the environment information acquisition section 1030B can also be performed by functional sections that acquire measurement data from each sensor (for example, in Figure 4, the coordinate system processing section 1031 and the figure position shape calculation section 1032). Therefore, in the following description, for convenience, the machine information acquisition section 1030A and the environment information acquisition section 1030B may be omitted.

The coordinate system processing section 1031 acquires measurement values from each sensor and performs processing to align the coordinate systems of each sensor. Specific examples of the processing to align the coordinate systems will be described later. The figure position shape calculation section 1032 calculates the parts to be highlighted by changing, for example, the color or line type in the images of the work machine 100 and its surrounding environment. The free viewpoint image generation section 1033 generates a free viewpoint image of the work machine 100 or its surrounding environment from a free viewpoint using the sensor measurement values with aligned coordinate systems. The AR image generation section 1034 generates an image of the highlighted part calculated by the figure position shape calculation section 1032 (an image with changed color or line type, referred to as an AR image). The image superimposition section 1035 synthesizes the free viewpoint image and the AR image. The image compression section 1036 compresses the synthesized image and transmits it to the remote control room 300 via the communication device 104.

The image generation device 103 can be configured by hardware such as circuit devices implementing the operations of each functional section, or by executing software implementing the operations of each functional section on a computing device. In the latter case, the image generation device 103 has the configuration shown in the upper right of Figure 4. The CPU (Central Processing Unit) 151 executes software implementing the operations of each functional section. ROM 152, RAM 153, and HDD (hard disk drive) 154 store data used by the CPU 151. The operation interface 155 is an interface for inputting operation instructions to the image generation device 103. The display interface 156 is an image display interface.

In the configuration example shown in Figure 4, the state of the work machine 100 and the state of the surrounding environment of the work machine 100 are detected by the group of sensors provided in the work machine 100. The image generation device 103 is provided on the work machine 100, and the operation support image used to operate the work machine 100 is generated by the work machine 100. The remote control room 300 receives the operation support image as a two-dimensional image and displays it.

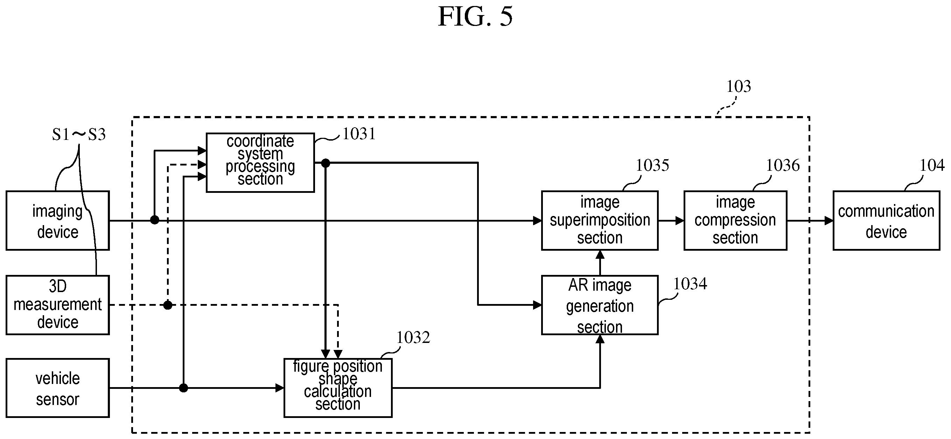

Figure 5 is a functional block diagram of the image generation device 103 when a free viewpoint image is not generated. When a free viewpoint image is not generated, the image superimposition section 1035 synthesizes the images acquired by each sensor and the AR image. The rest is the same as in Figure 4. For convenience of description, the hardware configuration is omitted. The same applies to the following embodiments.

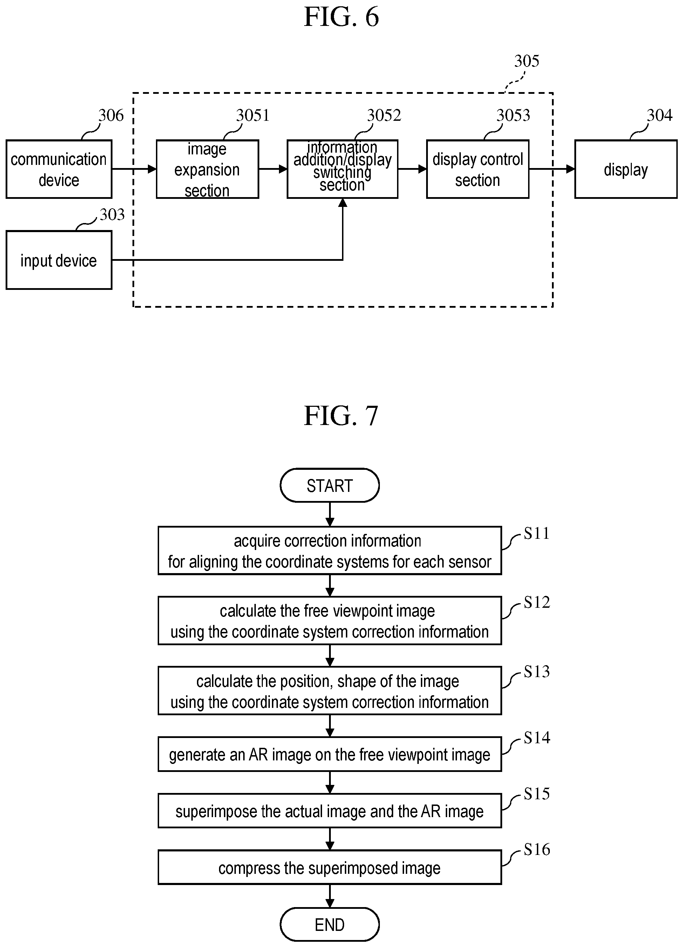

Figure 6 is a functional block diagram of the operation control device 305. The operation control device 305 includes an image expansion section 3051, an information addition/display switching section 3052, and a display control unit 3053. The image expansion section 3051 acquires the synthesized image from the image generation device 103 via the communication device 306 and expands the compression of the synthesized image. The information addition/display switching section 3052 adds information to the image displayed on the display 304 or switches the display content according to the operation instructions from the input device 303. This point will be described later. The display control section 3053 outputs the image displayed on the display 304.

Figure 7 is a flowchart explaining the procedure for generating a free viewpoint image by the image generation device 103. The coordinate system processing section 1031 calculates correction information for aligning the coordinate systems for each sensor using the procedure described later (S11). The free viewpoint image generation section 1033 calculates the free viewpoint image using the coordinate system correction information (S12). The figure position shape calculation section 1032 calculates the position, shape, etc., of the AR image using the coordinate system correction information (S13). The AR image generation section 1034 generates an AR image to be superimposed on the free viewpoint image (S14). The image superimposition section 1035 superimposes the free viewpoint image and the AR image (S15). The image compression section 1036 compresses the image (S16).

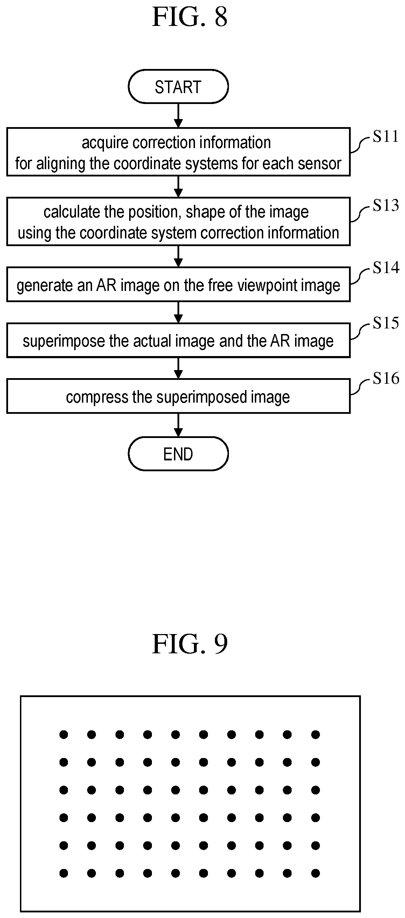

Figure 8 is a flowchart explaining the procedure for generating a normal image by the image generation device 103. The procedure for generating a normal image is generally the same as in Figure 7, but the step of generating a free viewpoint image (S12) is omitted.

Figure 9 is an example of a dot pattern used in the calibration of the coordinate system integration process performed by the coordinate system processing section 1031. The coordinate system processing section 1031 performs processing to align the coordinate systems of each sensor (coordinate system transformation). This process should, in principle, be executed only once after installing various sensors on the work machine 100. This process includes the following four calibrations: (a) Calibration 1: Correcting the internal parameters and distortion of the sensors (S1 to S3); (b) Calibration 2: Coordinate system transformation between the image sensor and the 3D measurement device; (c) Calibration 3: Coordinate system transformation between 3D measurement devices; (d) Calibration 4: Coordinate system transformation between the 3D measurement device and the work machine 100.

In Calibration 1, the coordinate system processing section 1031 calculates the internal parameters of the image sensor (camera matrix consisting of focal lengths $f_x$, $f_y$, and image center coordinates $c_x$, $c_y$) and calculates the distortion coefficients representing lens distortion. For example, a calibration process is performed using images taken from various directions the dot pattern, arranged in a grid shown in Figure 9, as input data. In the first step, the center coordinates of each dot are extracted from the input image and listed. Next, in the second step, the internal parameters of the camera and the distortion coefficients are calculated based on the list of center coordinates of the dots. By performing distortion removal correction on camera images using the internal parameters and distortion coefficients obtained from the above calibration process, it is possible to eliminate the distortion of the subject image that was significantly distorted at the periphery of the field of view.

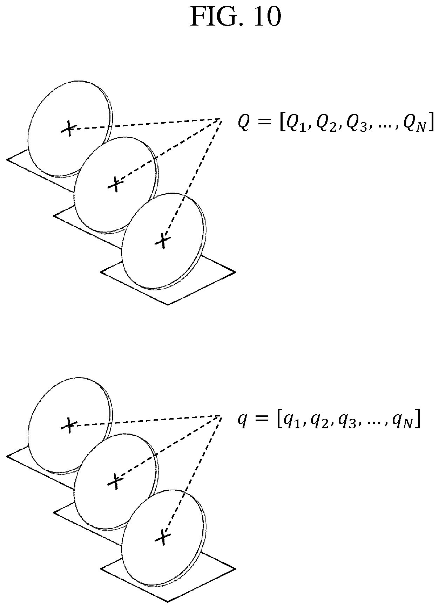

Figure 10 is a schematic diagram explaining Calibration 2. The purpose of Calibration 2 is to calculate the coordinate transformation matrix between the image sensor (camera) and the 3D measurement device (LiDAR). The image sensor and the 3D measurement device capture a common subject (hereinafter referred to as the disk shown in Figure 10), and the center coordinates of the disk are used as a common feature point. Using N feature points $[q_1, q_2, ... q_N]$ in the camera coordinate system and N feature points $[Q_1, Q_2, ... Q_N]$ in the LiDAR coordinate system, H that satisfies $q_i=HQ_i$ (i=1, 2, ..., N) is calculated. The coordinates $Q_i$ of the feature points in the LiDAR point cloud coordinate system are 3D vectors, and the coordinates $q_i$ of the feature points in the camera image coordinate system are 2D vectors. $q_i$ and $Q_i$ represent the same feature point in their respective coordinate systems.

When extracting feature points, they may be extracted by selecting the center of the disk using a mouse and pointer on the user interface, or by determining its centroid by recognizing the disk and, among other methods.

The calculation of the transformation matrix H using the extracted feature point list as described above can be regarded as a Perspective-n-Points (PnP) problem, and algorithms for solving it efficiently are widely known.

In the above description, the disk was used as an example of the subject, but it is not limited to this, and calibration may be performed using the surrounding terrain, buildings, other excavators, dumps, etc. This makes it possible to continuously correct the deviations that accumulate over time while working, without the need to prepare and install a special target.

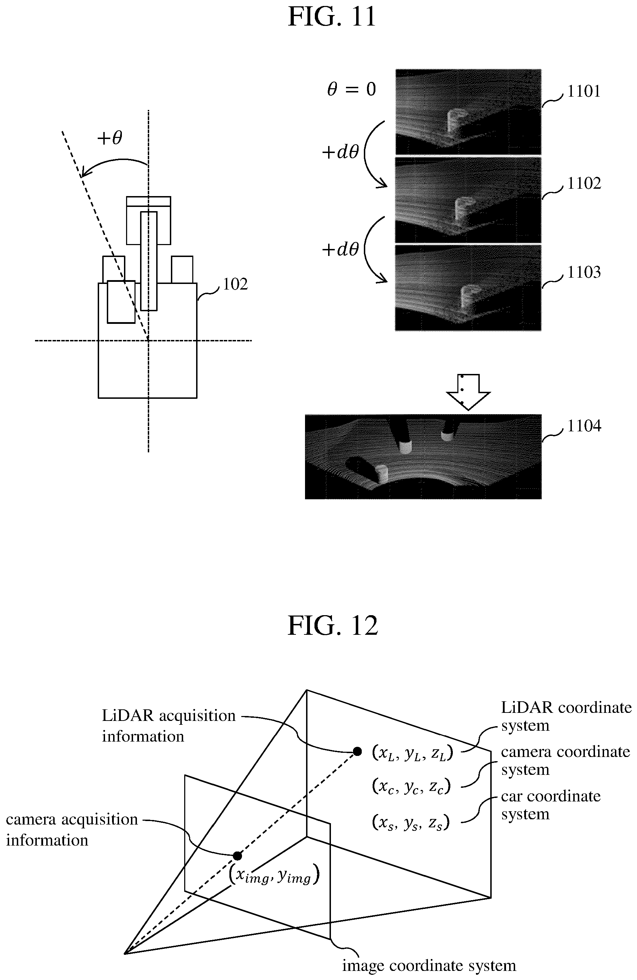

Figure 11 is a schematic diagram explaining Calibration 3. The purpose of Calibration 3 is to calculate the coordinate transformation matrix between LiDARs. If the overlap of the field of view between LiDARs is large, a similar method to Calibration 2 can be used. However, if the overlap of the field of view between LiDARs is small, it is difficult to take such measures. Therefore, by continuously acquiring point clouds with each LiDAR while rotating the swing body 102 and registering (aligning) the acquired point clouds, the field of view of a single LiDAR is effectively expanded, and the overlap of the field of view between LiDARs is effectively increased.

First, as shown in Figure 11, by performing registration processing for each LiDAR on the LiDAR point clouds acquired while rotating the swing body 102, the field of view is effectively expanded and an integrated point cloud is generated. By performing this process for all the LiDARs mounted on the work machine 100, the same number of integrated point clouds 1101 to 1103 are obtained. Next, by performing registration processing between the integrated point clouds, the coordinate transformation matrix between the point clouds is calculated. This coordinate transformation matrix corresponds to the information representing the relative posture and position between LiDARs. In each step, registration processing combining the Iterative Closest Point (ICP) method and the Random Sample Consensus (RANSAC) method can be used.

Calibration 4 aims to calculate the coordinate transformation matrix between the LiDAR and the work machine 100. The coordinate transformation matrix between the LiDAR and the work machine 100 can be calculated from the LiDAR displacement and the change in the point cloud during vehicle body rotation. Furthermore, it can be executed based on the change in each LiDAR point cloud calculated in the first step of Calibration 3 during vehicle turning, therefore it is possible to reduce the computational load.

Figure 12 shows the coordinate system used when generating free viewpoint images. The free viewpoint image generation section 1033 needs to integrate the acquired camera images, 3D measurement data, and vehicle sensor measurement data. Therefore, first, using the coordinate system integration processing results and LiDAR point cloud data, a depth image (a 2D array storing depth information) is generated from the viewpoint of the camera paired with the LiDAR.

The free viewpoint image generation section 1033 first converts the LiDAR point cloud obtained as coordinate information in the LiDAR coordinate system into a representation based on the camera coordinate system. Let the coordinates of a point in the LiDAR coordinate system be $(x_L, y_L, z_L)$, and the coordinates of the same point in the camera coordinate system be $(x_c, y_c, z_c)$, then these two coordinates are expressed by Equation 1. The $3 \times 4$ matrix in Equation 1 is the posture transformation matrix calculated in Calibration 2.

[Equation 1]

$$\begin{pmatrix} x_c \\ y_c \\ z_c \end{pmatrix} = \begin{pmatrix} r_{11} & r_{12} & r_{13} & t_1 \\ r_{21} & r_{22} & r_{23} & t_2 \\ r_{31} & r_{32} & r_{33} & t_3 \end{pmatrix} \begin{pmatrix} x_L \\ y_L \\ z_L \end{pmatrix} \quad (1)$$

Next, the free viewpoint image generation section 1033 calculates which pixel in the video the point cloud will be projected onto by converting the LiDAR point cloud from the camera coordinate system to the video coordinate system. When projecting one point of the point cloud, represented as $(x_c, y_c, z_c)$ in the camera coordinate system, onto the camera image, the coordinates (pixel index) are converted as $(x_{img}, y_{img})$. This conversion is expressed by equation 2. The $3 \times 3$ matrix in Equation 2 is the camera internal parameters calculated in Calibration 1. The coefficient s is a scaling factor such that the z component of the coordinate value in the image coordinate system becomes 1.

[Equation 2]

$$s \begin{pmatrix} x_{img} \\ y_{img} \\ 1 \end{pmatrix} = \begin{pmatrix} f_x & 0 & c_x \\ 0 & f_y & c_y \\ 0 & 0 & 1 \end{pmatrix} \begin{pmatrix} x_c \\ y_c \\ z_c \end{pmatrix} \quad (2)$$

Finally, the free viewpoint image generation section 1033 stores values in the depth image D according to Equation 3 by using $(x_{img}, y_{img}, z_c)$ obtained by the above processing. The free viewpoint image generation section 1033 creates a depth image by repeatedly executing the above processing for each point in the LiDAR point cloud.

[Equation 3]

$$D\left(x_{img}, y_{img}\right) = z_c \quad (3)$$

Next, the free viewpoint image generation section 1033 generates a colored point cloud based on the vehicle body coordinate system. First, distortion correction processing of the camera image is performed. The distortion correction process uses the distortion coefficients obtained in Calibration 1. Subsequently, the free viewpoint image generation section 1033 generates a colored point cloud based on the camera coordinate system by using the distortion-corrected camera image and the depth image. A point in the colored point cloud generated from the elements (ximg, yimg) of the depth image and camera image is expressed by Equation 4. In Equation 4, R, G, and B correspond to the RGB 3 channels of the camera image.

[Equation 4]

$$p_c\left(x_{img}, y_{img}\right) = \begin{pmatrix} x_c \\ y_c \\ D\left(x_{img}, y_{img}\right) \\ R\left(x_{img}, y_{img}\right) \\ G\left(x_{img}, y_{img}\right) \\ B\left(x_{img}, y_{img}\right) \end{pmatrix} = \begin{pmatrix} x_c \\ y_c \\ z_c \\ R\left(x_{img}, y_{img}\right) \\ G\left(x_{img}, y_{img}\right) \\ B\left(x_{img}, y_{img}\right) \end{pmatrix} \quad (4)$$

Next, the free viewpoint image generation section 1033 converts the colored point cloud expressed based on the camera coordinate system into a representation in the LiDAR coordinate system. And finally, it converts from the LiDAR coordinate system to the vehicle body coordinate system. In this conversion, it is possible to convert to a coordinate system with the bottom of the swing body 102 as the origin by using the coordinate transformation matrix obtained in Calibrations 3 and 4. Next, the free viewpoint image generation section 1033 calculates a transformation matrix to the vehicle body coordinate system with the bottom of the travel body 101 as the origin based on the vehicle body posture information and vehicle body dimension values, and to convert the colored point cloud into a representation based on the vehicle body coordinate system with the bottom of the travel body 101 as the origin by performing similar calculations using it . Through the above processing, colored point cloud information can be generated.

Furthermore, the free viewpoint image generation section 1033 generates images from arbitrary viewpoints using applications such as 3D viewers by integrating the CG model of the work machine 100 generated based on the above surrounding colored point cloud and vehicle body posture information. This allows for the generation of free viewpoint images including the work machine 100 itself, even without capturing images of the work machine 100 itself.

The above method was explained using processing via depth images as an example. This is to execute by considering cases where AR superimposition display on the image is necessary. When obtaining only free viewpoint images, processing may be done without going through depth images.

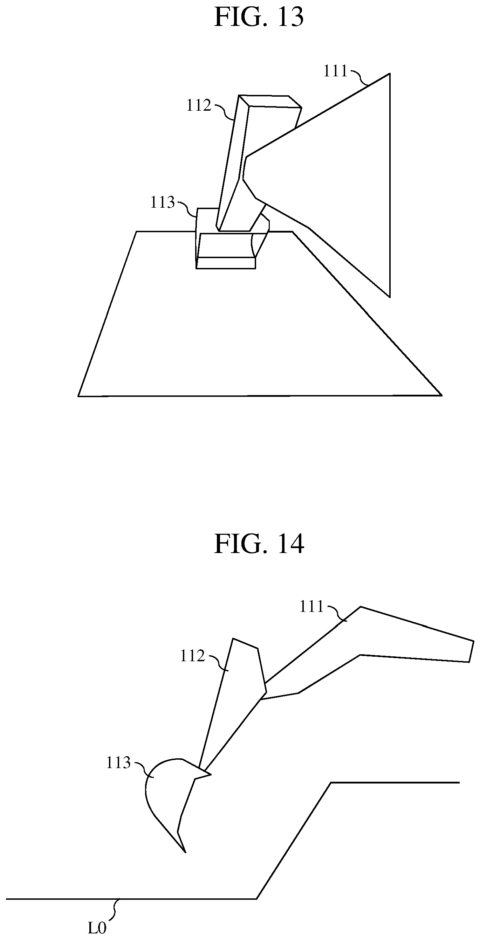

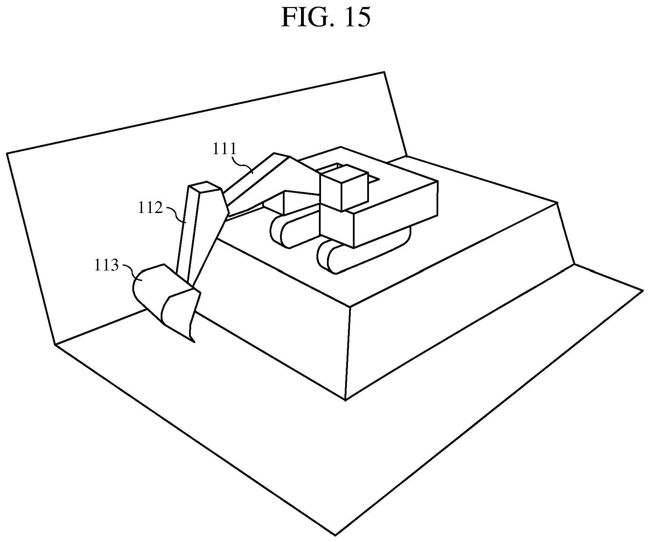

Figures 13 to 15 show examples of images generated by the image generation device 103 from different viewpoints. Figure 13 is an example of an image viewed from the operation room OR. Figure 14 is an example of an image when viewing the work machine 100 from the side as a free viewpoint. Figure 15 is an example of an image when viewing the work machine 100 from an overhead perspective as a free viewpoint.

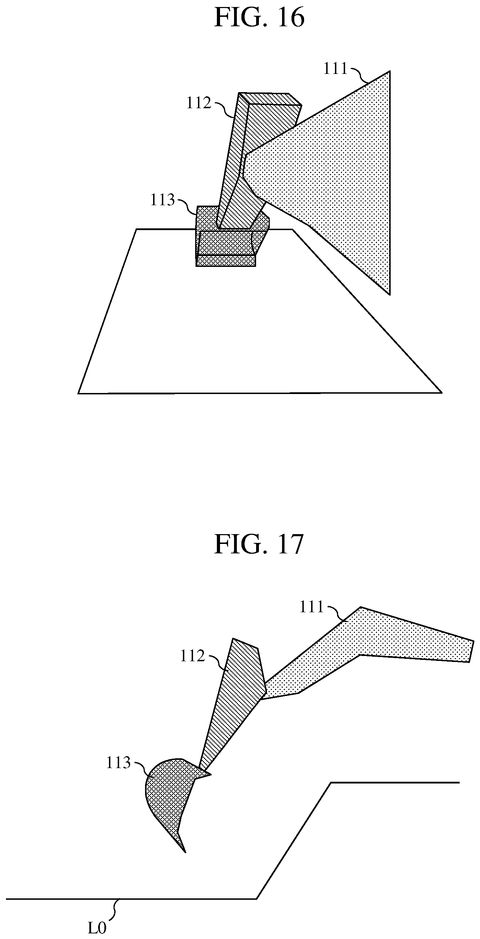

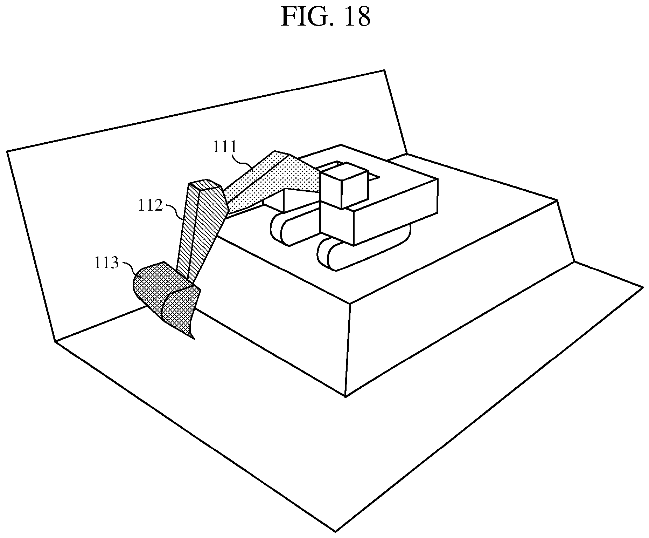

Figures 16 to 18 are examples of displays when colors are applied to the boom 111 to bucket 113 in images generated by the image generation device 103. Figures 16 to 18 correspond to Figures 13 to 15, respectively. As illustrated in Figures 16 to 18, some or all of the boom 111 to bucket 113 may have their drawing attributes (line type, line thickness, color, etc., similarly when changing drawing attributes below) changed. The image generation device 103 can change the drawing attributes to be different from other parts, for example, to visually display the range where the cylinder pressure of the boom 111 to bucket 113 exceeds a threshold. This allows the operator to visually and quickly grasp the part where an abnormality has occurred.

<Embodiment 2>

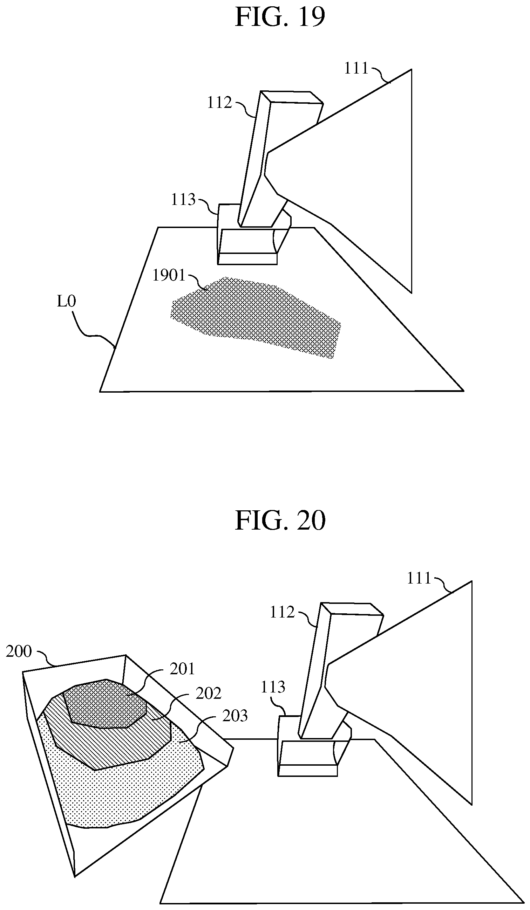

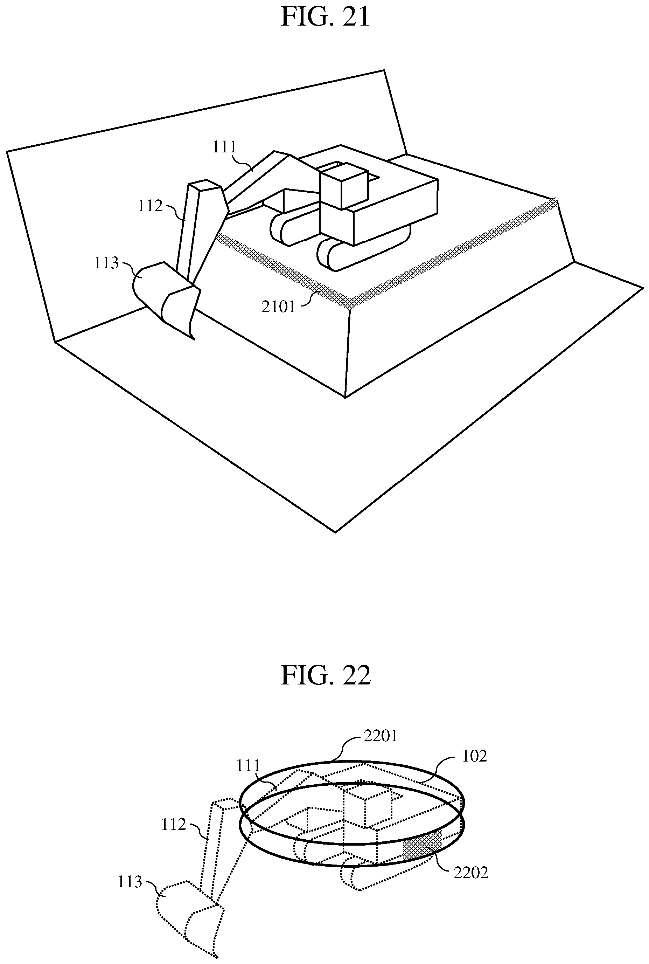

Figures 19 to 21 are examples of surrounding environment images of the work machine 100 generated by the image generation device 103. Figure 19 is an example where the excavation site 1901 is highlighted when the work machine 100 excavates the flat land L0. Figure 20 is an example where the earth and sand loaded into the dump truck 200 are highlighted. Regions 201 to 203 represent the shape of the earth and sand. The boundary lines between regions 201 to 203 correspond to contour lines. Different colors may be applied to each region. Figure 21 is an example where the edge 2101 of the plateau L1 is highlighted.

<Embodiment 3>

Figure 22 is an example of an image showing the movement range of the swing body 102 generated by the image generation device 103. The free viewpoint image generation section 1033 generates a cylinder 2201 with the maximum radius when the rotation center of the swing body 102 is the central axis, as an image showing the movement range of the swing body 102. Range 2202 is where the drawing attributes have been changed for parts where the swing body 102 and surrounding objects may collide.

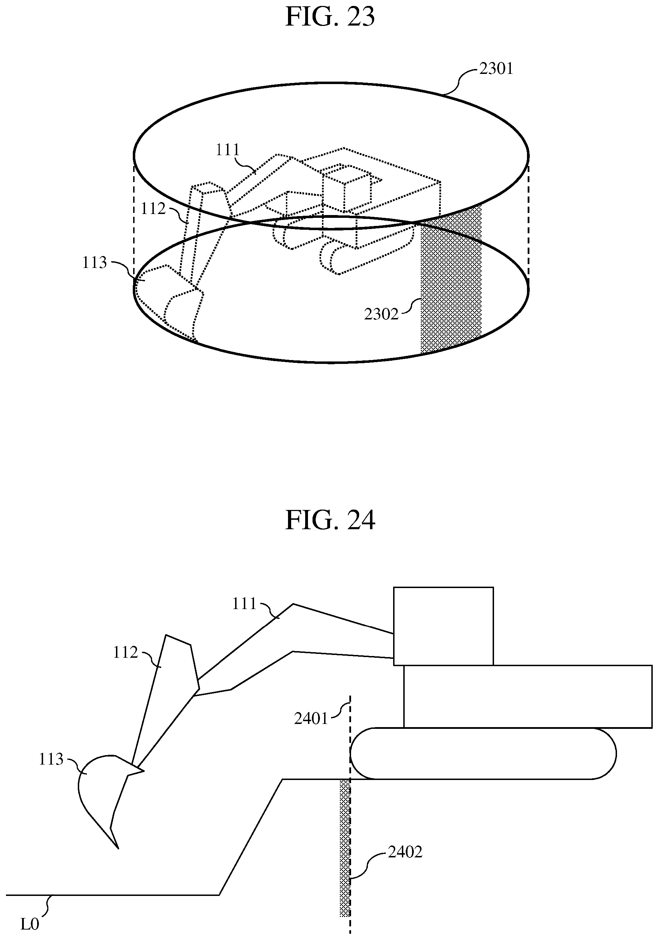

Figure 23 is another example of an image showing the movement range of the swing body 102 generated by the image generation device 103. Unlike Figure 22, the free viewpoint image generation section 1033 generates a cylinder 2301 with the maximum radius including the work machine (boom 111 to bucket 113) as an image showing the movement range of the swing body 102. Range 2302 is where the drawing attributes have been changed for parts where the work machine and surrounding objects may collide.

Figure 24 is an example of an image warning of undermining generated by the image generation device 103. Undermining refers to digging into the lower part of a descending surface that is vertical (or nearly vertical). In Figure 24, digging into the surface 2402 located below the front 2401 of the travel body 101 corresponds to this. The free viewpoint image generation section 1033 can identify the surface 2402 by identifying the front 2401 and the plateau L1. The free viewpoint image generation section 1033 generates an image highlighting the surface 2402.

<Embodiment 4>

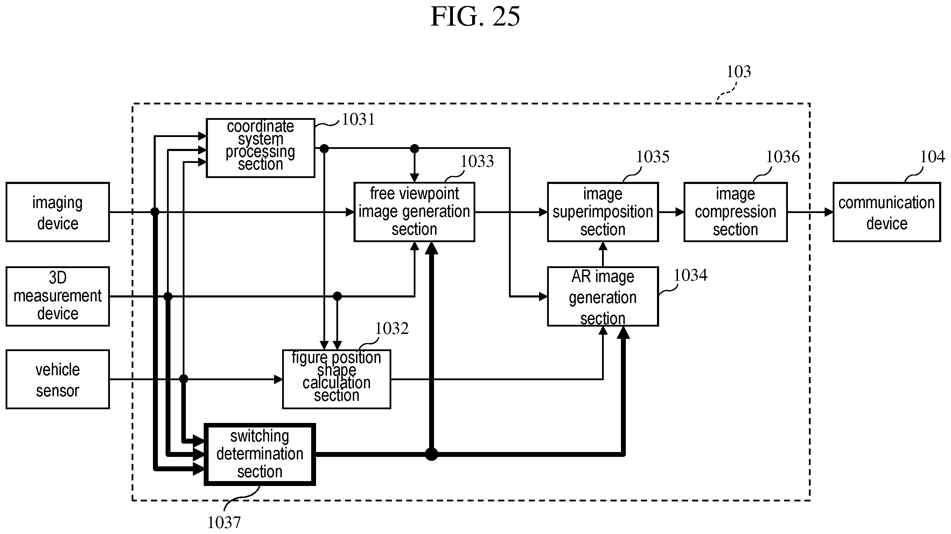

Figure 25 is a functional block diagram of the image generation device 103 according to Embodiment 4 of the present invention. In addition to the configuration described in Figure 4 of Embodiment 1, the bold line parts are newly added. The switching determination section 1037 switches the free viewpoint image according to the operating state of the work machine 100 (i.e., the work content instructed by the operator or remote operator to the work machine 100). The content of the images to be switched includes, for example, the following.

(Image Example 1: Machine Information)

As an example of a free viewpoint image, machine information representing the state of the work machine 100 can be displayed within the free viewpoint image. Examples of machine information include, but are not limited to, the following.

(Image Example 1: Machine Information: Cylinder Pressure)

When the work machine 100 performs excavation work, an image showing the pressure of the hydraulic cylinder provided in the work machine 100 can be displayed within the free viewpoint image. For example, by applying colors representing cylinder pressure to each of the boom 111, arm 112, and bucket 113, cylinder pressure information can be superimposed within the free viewpoint image. Figures 16 to 18 are one example of this.

(Image Example 1: Machine Information: Movement Range of Swing Body)

When the work machine 100 rotates the swing body 102, an image showing the movement range (or rotation trajectory) of the swing body 102 can be displayed within the free viewpoint image. For example, a cylinder representing the movement range of the swing body 102 can be superimposed within the free viewpoint image. Figures 22 to 23 are one example of this.

(Image Example 1: Machine Information: Undermining Area)

When the work machine 100 performs excavation work, the area corresponding to undermining in the free viewpoint image can be highlighted, for example, by coloring. Figure 24 is one example.

(Image Example 2: Environmental Information)

As an example of a free viewpoint image, environmental information representing the state of the surroundings of work machine 100 can be displayed within the free viewpoint image. Examples of environmental information include, but are not limited to, the following.

(Image Example 2: Environmental Information: Loading Shape)

When work machine 100 loads excavated earth and sand onto a dump truck or the like, an image representing the shape of the loaded earth and sand can be displayed within the free viewpoint image. Figure 20 is one example.

(Image Example 2: Environmental Information: Excavation Shape)

When work machine 100 performs excavation work, an image representing the shape of the excavated area can be displayed within the free viewpoint image. Figure 19 is one example. The shape of excavation area 1901 may also be displayed using contour lines or colors, similar to regions 201-203 in Figure 20.

(Image Example 2: Environmental Information: Surrounding Terrain)

When work machine 100 is traveling, an image representing the unevenness and edge shapes of the surrounding terrain can be displayed within the free viewpoint image. Figure 21 is an example highlighting edge 2101. The unevenness of the terrain may also be displayed using contour lines or colors, similar to regions 201-203 in Figure 20.

Examples of image types superimposed within the free viewpoint image include machine information and environmental information. When superimposing these within the free viewpoint image, the transparency, color, line thickness, etc., of the superimposed image may be adjusted as appropriate to emphasize the superimposed parts. Furthermore, the switching determination section 1037 may switch the free viewpoint according to the work performed by work machine 100 or the type of superimposed image. For example, when displaying an undermining area, a horizontal viewpoint as shown in Figure 24 is desirable.

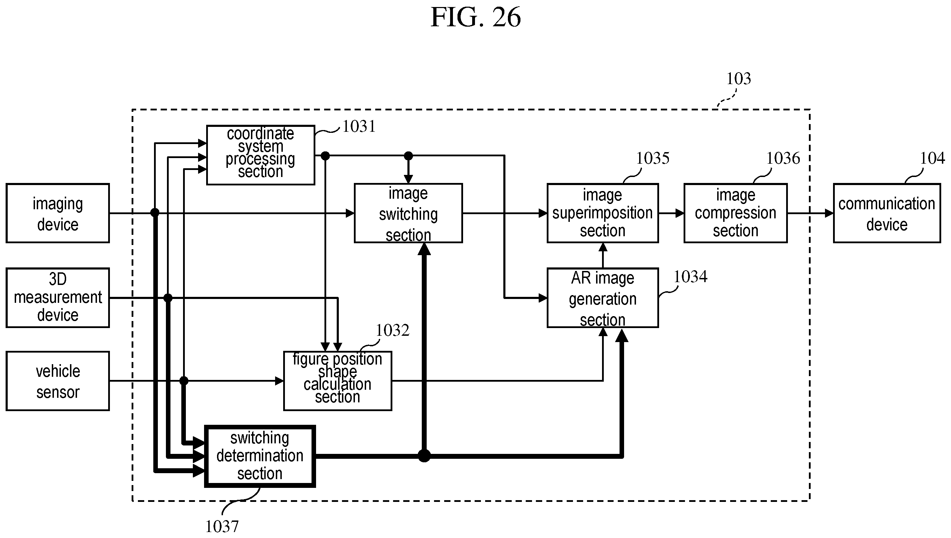

Figure 26 is a functional block diagram of the image generation device 103 when a free viewpoint image is not generated. In addition to the configuration described in Figure 5 of Embodiment 1, the bold line parts have been newly added. The added parts are similar to those in Figure 25.

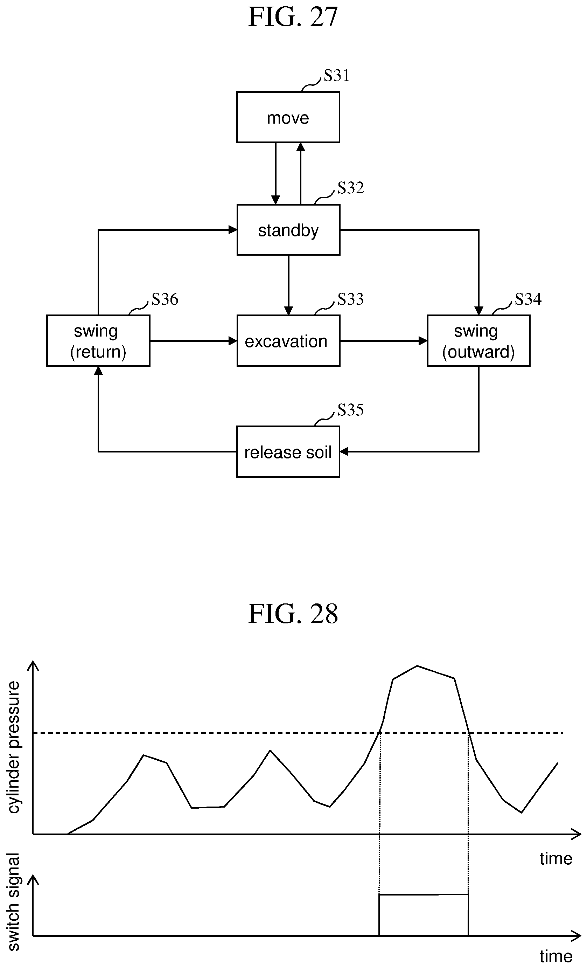

Figure 27 is a state transition diagram of work machine 100. While moving (S31), other operations such as excavation and swinging are not performed. In the standby state (S32), excavation (S33) or swinging (outward) (S34) is performed. Swinging (outward) is a preliminary operation for releasing soil (S35) of the excavated earth and sand. After releasing soil, the swing body 102 is returned (S36: swinging (return)), and standby or excavation operations are performed. In each operation, the machine information and environmental information can be displayed with an appropriate free viewpoint.

<Embodiment 5>

Figure 28 is an example of a threshold that triggers switching of the free viewpoint image. As one example, when the detected value of the hydraulic cylinder sensor exceeds the threshold, a switching signal is output from the switching determination section 1037 to the free viewpoint image generation section 1033 to instruct switching of the free viewpoint image. This example uses the detected value of a vehicle sensor that detects the state of work machine 100 as a trigger, but similar triggers can be provided for machine information and environmental information. For example, the following examples can be considered.

(Example 1 of Display Switching)

The image generation device 103 acquires the pressure of the cylinders provided in work machine 100 as information representing the state of work machine 100. Sensor S4 (vehicle sensor) can be configured with a boom cylinder pressure sensor, an arm cylinder pressure sensor, a bucket cylinder pressure sensor, etc. The image generation device 103 changes the drawing attributes of the parts where the acquired cylinder pressure exceeds the threshold. Figures 16 to 18 are one example. For the free viewpoint, it is configured to include at least the parts where the cylinder pressure exceeds the threshold within the free viewpoint image. This allows the operator to be notified that the operating status of work machine 100 is abnormal.

(Example 2 of Display Switching)

The image generation device 103 can also acquire the degree of unevenness of the arrival location where the loading vehicle, which loads the excavated earth and sand from work machine 100, is scheduled to arrive, as information representing the state of the surrounding environment of work machine 100. For example, the degree of unevenness can be acquired by imaging the arrival location with sensors S1 to S3 or by measuring the 3D shape of the arrival location with LiDAR. The image generation device 103 changes the drawing attributes of the arrival location if the acquired degree of unevenness exceeds the threshold. For the free viewpoint, it is configured to include at least the arrival location. This allows the operator to be notified that the arrival location is not suitable for the arrival of the loading vehicle.

(Example 3 of Display Switching)

The image generation device 103 can also acquire the estimated weight of the earth and sand on the loading vehicle, which loads the excavated earth and sand from work machine 100, as information representing the state of the surrounding environment of work machine 100. For example, the accumulation of earth and sand can be calculated by imaging the earth and sand with sensors S1 to S3 or by measuring the 3D shape of the earth and sand with LiDAR. The predicted weight of the earth and sand can be calculated by multiplying the calculated volume by the average volume density of the earth and sand. The image generation device 103 changes the drawing attributes of the loaded earth and sand if the calculated predicted weight exceeds the threshold. Figure 20 is one example. For the free viewpoint, it is configured to include at least the loaded earth and sand. This allows the operator to be notified of the overloading of earth and sand.

(Example 4 of Display Switching)

The image generation device 103 can also acquire the distance between the foremost part of work machine 100 (or the rearmost part when reversing) and the slope present in the direction of travel of work machine 100, as information representing the state of the surrounding environment of work machine 100. For example, the distance from work machine 100 to the slope can be acquired by imaging the surrounding terrain with sensors S1 to S3 or by measuring the surrounding terrain with LiDAR. The image generation device 103 (AR image generation section 1034 or free viewpoint image generation section 1033) changes the drawing attributes of the edge of the slope if the acquired distance is below the threshold (or if the risk of work machine 100 slipping from the slope, calculated based on the acquired distance, is above the threshold). Figure 21 is one example. The risk of slipping generally depends on the distance between work machine 100 and the slope, but appropriate parameters such as the hardness of the ground may also be considered. For the free viewpoint, it is configured to include at least the edge of the slope. This allows the operator to be notified of the possibility of work machine 100 slipping from the slope.

(Example 5 of Display Switching)

The image generation device 103 may acquire the movement range (swing range) of the rotating body, including swing body 102 or swing body 102 and boom 111 to bucket 113, when work machine 100 swings, as information representing the state of work machine 100. The movement range can be calculated using the size and extension range of each part, which are pre-stored as shape information of work machine 100. The image generation device 103 can further acquire the position of objects present around work machine 100 as information representing the state of the surrounding environment of work machine 100. For example, the position of surrounding objects can be acquired by imaging the surroundings of work machine 100 with sensors S1 to S3 or by measuring the surrounding terrain with LiDAR. The image generation device 103 (AR image generation section 1034 or free viewpoint image generation section 1033) changes the drawing attributes of the parts of the swing range that may collide with surrounding objects if the distance between the surrounding objects and the swing range is below the threshold (or if the risk of collision between work machine 100 and surrounding objects, calculated based on the position of surrounding objects, is above the threshold). Figures 22 to 23 are one example. The risk of collision generally depends on the distance between work machine 100 and surrounding objects, but appropriate parameters such as the movable range due to the extension and contraction operations of boom 111 to bucket 113 may also be considered. For the free viewpoint, it is configured to include at least the entire swing range. This allows the operator to be notified of the possibility of collision between work machine 100 and surrounding objects.

(Example 6 of Display Switching)

The image generation device 103 may acquire the distance between the front of work machine 100 and the slope present in front of work machine 100 as information representing the state of the surrounding environment of work machine 100. For example, the distance from work machine 100 to the slope can be acquired by imaging the surrounding terrain with sensors S1 to S3 or by measuring the surrounding terrain with LiDAR. The image generation device 103 (AR image generation section 1034 or free viewpoint image generation section 1033) changes the drawing attributes of the slope if the acquired distance is below the threshold (or if the risk of work machine 100 excavating the ground below itself, calculated based on the acquired distance, is above the threshold). Figure 24 is one example. The risk of undermining generally depends on the distance between work machine 100 and the slope, but appropriate parameters such as the hardness of the ground may also be considered. For the free viewpoint, it is configured to include at least the side of work machine 100 and the slope. This allows the operator to be notified of the possibility of work machine 100 performing undermining.

<Embodiment 6>

In the above embodiments, it was explained that the image generation device 103 provided in work machine 100 captures the surrounding environment of work machine 100 and performs coordinate system processing, and then transmits the results to the remote control room 300. Some of the processing performed by the image generation device 103 may be carried out in the remote control room 300. In Embodiment 6 of the present invention, a specific example will be described.

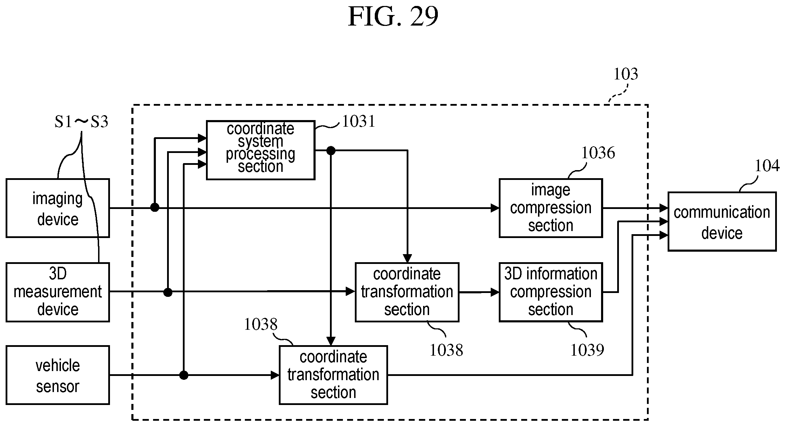

Figure 29 shows a modified example of the image generation device 103. In this configuration example, the state of the work machine 100 and the state of the surrounding environment of the work machine 100 are detected by a group of sensors provided in the work machine 100. The image generation device 103 performs coordinate transformation on the data acquired by the sensors, and then transmits it to the remote control room 300. The remote control room 300 uses this to generate an operation support image and displays it.

In Figure 29, since the image generation device 103 does not generate a free viewpoint image (or a normal viewpoint image), the free viewpoint image generation section 1033, the figure position shape calculation section 1032, the AR image generation section 1034, and the image superimposition section 1035 are provided on the remote control room 300 side. Instead, it is equipped with a coordinate transformation section 1038 and a 3D information compression section 1039. It is also possible to transmit the data measured by the imaging device, the 3D measurement device, and the vehicle sensors directly to the remote control room 300, but due to overlapping fields of view, the data may become redundant. Therefore, the coordinate transformation section 1038 integrates the coordinate systems of these data, and then transmits them to the remote control room 300.

The coordinate transformation section 1038 converts the coordinate systems of the 3D measurement data acquired by the 3D measurement device and the vehicle information acquired by the vehicle sensors based on the 2D image acquired by the imaging device. The 3D measurement data is an integration of the 3D measurement data from each of sensors S1 to S3. The image compression section 1036 compresses the 2D image from the imaging device, and the 3D information compression section 1039 compresses the 3D measurement data. Since the vehicle information is relatively small in size, it does not necessarily need to be compressed. The communication device 104 transmits these data to the remote control room 300.

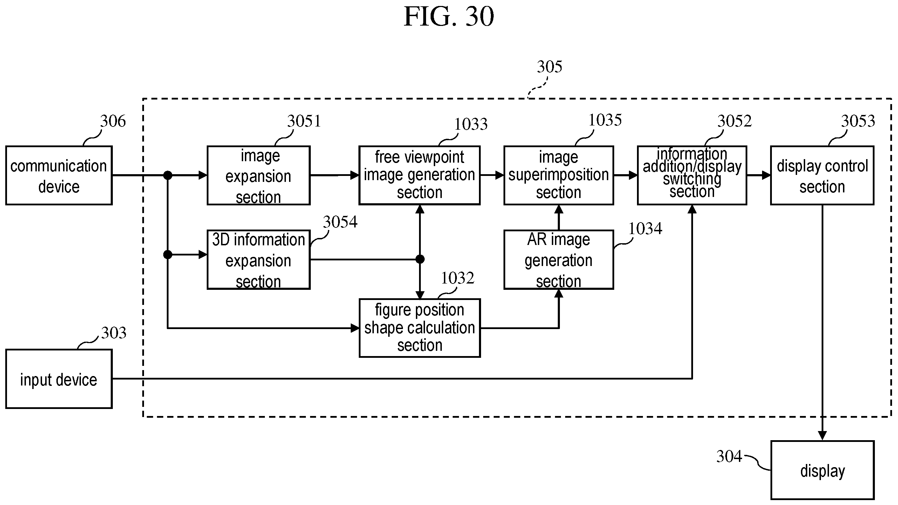

Figure 30 is a functional block diagram of the operation control device 305. The operation control device 305 in Figure 30 receives measurement data from each sensor from the image generation device 103 in Figure 29 and generates a free viewpoint image (or a normal viewpoint image). The operation control device 305 includes the free viewpoint image generation section 1033, the figure position shape calculation section 1032, the AR image generation section1034, and the image superimposition section 1035, which have been transferred from the image generation device 103. It further includes a 3D information expansion section 3054. The 3D information expansion section 3054 expands the 3D measurement data received from the image generation device 103. The operation of other parts is the same as in the above embodiments.

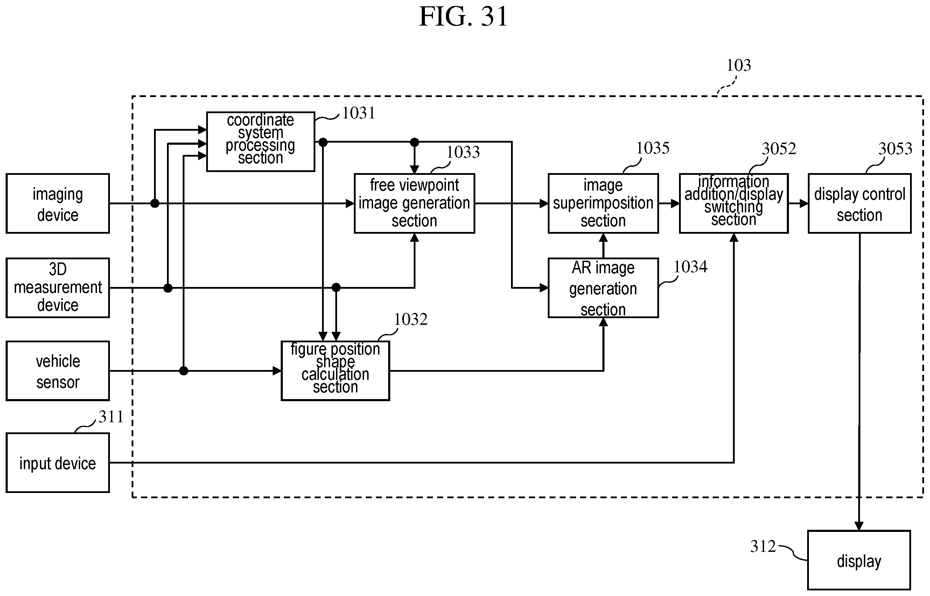

Figure 31 shows a modified example of the image generation device 103. Figure 31 shows a different modified example from Figure 29. In this configuration example, the state of the work machine 100 and the state of the surrounding environment of the work machine 100 are detected by a group of sensors provided in the work machine 100. The image generation device 103 performs coordinate transformation on the data acquired by the sensors, generates an operation support image, and displays it.

The image generation device 103 shown in Figure 31 is mounted on the work machine 100 and is a device that displays an operation support image on the work machine 100. Therefore, in addition to the configuration described in Figures 4 to 5, it includes the configuration described in Figure 6. However, since it is not necessary to send and receive measurement data between the image generation device 103 and the remote control room 300, the image compression section 1036, the communication device 306, and the image expansion section 3051 are not necessary. The input device 311 and the display 312 are devices similar to the input device 303 and the display 304, respectively.

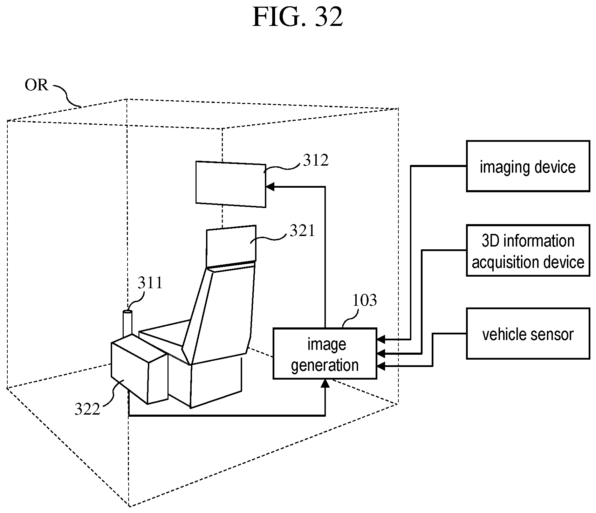

Figure 32 is a configuration diagram of the operation room OR. Figure 32 is a configuration example when the image generation device 103 of Figure 31 is provided. The operation room OR includes a driver's seat 321, an operation device 322, an input device 311, a display 312, and an image generation device 103. The operator sits in the driver's seat 321 and inputs operation instructions via the input device 311. The operation device 322 passes the operation instructions to the image generation device 103. The image generation device 103 displays the operation support image on the display 312.

<Regarding Modifications of the Present Invention>

The present invention is not limited to the embodiments described above and includes various modifications. For example, the above-described embodiments are detailed to clearly explain the present invention and are not necessarily limited to those including all the described configurations. It is also possible to replace part of the configuration of one embodiment with the configuration of another embodiment, or to add the configuration of another embodiment to the configuration of one embodiment. Furthermore, it is possible to add, delete, or replace parts of the configuration of each embodiment with other configurations.

In the above embodiments, when the image generation device 103 superimposes information representing the state of the work machine 100 (machine information) and information representing the state of the surrounding environment of the work machine 100 (environment information) on a free viewpoint image (or normal viewpoint image), these pieces of information can also be expressed and superimposed as text images. In this case, the text image is also an example of machine information or environment information.

In the above embodiments, the user may select the information to be superimposed on the image generated by the image generation device 103. For example, the information required for operation support differs between experienced operators and novice operators. Therefore, the user may choose which of the machine information and environment information to superimpose on the operation support screen. This is the same whether the operation support image is displayed in the remote control room 300 or on the work machine 100.

In the above embodiments, the user may switch the free viewpoint themselves. In each free viewpoint, it is sufficient to superimpose the machine information and environment information that are desirable to display at that time. For example, when displaying an image viewed from the operation room OR, the information illustrated in Figures 16 to 17, Figures 19 to 20, etc., may be superimposed. The user may pre-set which information to superimpose for each viewpoint, or it may be preset for each viewpoint.

In the above embodiments, the information to be superimposed on each viewpoint image can be switched by the device on the display side, or after receiving all the information on the display side, it can be switched on the display side as to which information to superimpose. The switching may be performed, for example, by user instruction.

In the above embodiments, a hydraulic excavator was illustrated as an example of the work machine 100, but the configuration example according to the present invention can also be applied when supporting the operation of other work machines. That is, even in other work machines, by presenting machine information and environment information on the screen viewed by the operator, the same effect as the present invention can be achieved.

Description of Reference Characters

100: Work machine
103: Image generation device
1030A: Machine information acquisition section
1030B: Environment information acquisition section
1031: Coordinate system processing section
1033: Free viewpoint image generation section
1034: AR image generation section
300: Remote control room

**Claims**

1. An image generation device configured to acquire captured images from an imaging device installed on a work machine and generate images used to assist an operator in remotely controlling the work machine comprising:

   a machine information acquisition section that acquires machine information representing the state of the work machine from a vehicle sensor installed on the work machine;
   an environment information acquisition section that acquires environment information representing the state of the surroundings of the work machine from a 3D measurement device and an imaging device installed on the work machine and
   an AR image generation section that generates an AR image indicating at least one of the machine information and the environment information by superimposing the AR image on the captured image based on the machine information and the environment information, wherein

the AR image generation section generates a machine information AR image, which is the AR image representing the machine information to be superimposed on the position corresponding to the part of the work machine indicated by the machine information in the captured image, or generates an environment information AR image, which is the AR image representing the environment information to be superimposed on the position corresponding to the surroundings of the work machine indicated by the environment information in the captured image.

2. The image generation device according to claim 1 further includes a free viewpoint image generation section that generates a free viewpoint image of the work machine from the captured image when viewed from any viewpoint; the AR image generation section generates the machine information AR image or the environment information AR image corresponding to the free viewpoint image.

3. The image generation device according to claim 2 includes a coordinate system processing section that converts coordinate systems;

the coordinate system processing section converts the coordinate system of the 3D measurement data measured by the 3D measurement device provided in the work machine to the coordinate system of the imaging device provided in the work machine; the coordinate system processing section further converts the 3D measurement data converted to the coordinate system of the imaging device to the coordinate system of the free viewpoint image generated by the free viewpoint image generation section; the free viewpoint image generation section generates the free viewpoint image by projecting the 3D measurement data converted to the coordinate system of the free viewpoint image onto the free viewpoint image.

4. In the image generation device according to claim 1: the AR image generation section is configured to switch between the machine information, the environment information, or both the machine information and the environment information based on the machine information and the environment information, or according to the selection of the operator operating the work machine.

5. In the image generation device according to claim 1: the AR image generation section generates the AR image in which the drawing attributes of a part of the region are changed so that the part of the region is displayed more prominently than other regions based on the machine information and the environment information.

6. In the image generation device according to claim 2: the free viewpoint image generation section is configured to change the viewpoint in the free viewpoint image based on the machine information and the environment information, or according to the selection of the operator operating the work machine.

7. In the image generation device according to claim 1:

the AR image generation section acquires information on whether the work machine is performing a predetermined operation from the vehicle sensor, the 3D measurement device, or the imaging device installed on the work machine; the AR image generation section generates the AR image in which the region corresponding to the predetermined operation is emphasized.

8. In the image generation device according to claim 2:

the AR image generation section and the free viewpoint image generation section, according to the operation performed by the work machine; switch between the machine information AR image, the environment information AR image, and both the machine information AR image and the environment information AR image to be superimposed on the captured image, or change the drawing attributes of a part of the region in the AR image to generate the AR image in which the part of the region is emphasized more than other regions, or change the viewpoint by the free viewpoint image.

9. In the image generation device according to claim 2:

the AR image generation section and the free viewpoint image generation section acquire information on a predetermined threshold in the machine information or the environment information;

the AR image generation section and the free viewpoint image generation section, based on the threshold, switch between the machine information AR image, the environment information AR image, and both the machine information AR image and the environment information AR image to be superimposed on the captured image, or change the drawing attributes of a part of the region in the AR image to generate the AR image in which the part of the region is emphasized more than other regions, or change the viewpoint by the free viewpoint image.

**10.** In the image generation device according to claim 9:

the AR image generation section and the free viewpoint image generation section acquire information on the pressure of the cylinder provided in the work machine from the vehicle sensor as the machine information;

the free viewpoint image generation section switches the viewpoint of the free viewpoint image to include at least the cylinder that exceeds the threshold when the pressure exceeds the threshold;

along with this, the AR image generation section generates the AR image in which the drawing attributes of the region of the cylinder where the pressure exceeds the threshold are changed to be displayed more prominently than other regions.

**11.** In the image generation device according to claim 9:

the AR image generation section and the free viewpoint image generation section acquire information on the degree of unevenness of the arrival location where the loading vehicle that loads the earth and sand excavated by the work machine is scheduled to arrive from the 3D measurement device or the imaging device as the environment information;

the free viewpoint image generation section switches the viewpoint of the free viewpoint image to include at least the arrival location when the degree of unevenness exceeds the threshold;

along with this, the AR image generation section generates the AR image in which the drawing attributes of the region of the arrival location are changed to be displayed more prominently than other parts.

**12.** In the image generation device according to claim 9:

the AR image generation section and the free viewpoint image generation section acquire information on the expected weight of the earth and sand on the loading vehicle when the earth and sand excavated by the work machine is transferred to the loading vehicle from the 3D measurement device or the imaging device as the environment information;

the free viewpoint image generation section switches the viewpoint of the free viewpoint image to include at least the earth and sand on the loading vehicle when the expected weight exceeds the threshold;

along with this, the AR image generation section generates the AR image in which the drawing attributes of the region of the earth and sand on the loading vehicle are changed to be displayed more prominently than other parts.

**13.** In the image generation device according to claim 9:

the AR image generation section and the free viewpoint image generation section acquire information on the distance between the foremost part in the traveling direction of the work machine and the slope existing in the traveling direction of the work machine from the 3D measurement device or the imaging device as the environment information;

the AR image generation section or the free viewpoint image generation section calculates the risk of the work machine slipping off the slope based on the distance;

the free viewpoint image generation section switches the viewpoint of the free viewpoint image to include at least the edge of the slope when the risk exceeds the threshold;

along with this, the AR image generation section generates the AR image in which the drawing attributes of the region of the edge of the slope are changed to be displayed more prominently than other parts.

**14.** In the image generation device according to claim 9:

the AR image generation section and the free viewpoint image generation section acquire information on the movement range when the work machine turns from the vehicle sensor as the machine information;

the AR image generation section and the free viewpoint image generation section acquire information on the position of objects existing around the work machine from the 3D measurement device or the imaging device as the environment information;

the AR image generation section or the free viewpoint image generation section calculates the risk of collision between the work machine and the object when the work machine turns based on the movement range and the position of the object;

the free viewpoint image generation section switches the viewpoint of the free viewpoint image to include at least the movement range when the risk exceeds the threshold;

along with this, the AR image generation section generates the AR image in which the drawing attributes of the region of the part where the work machine and the object may collide in the movement range are changed to be displayed more prominently than other parts.

**15.** In the image generation device according to claim 9:

the AR image generation section and the free viewpoint image generation section acquire information on the distance between the front of the work machine and the descending surface existing in front of the work machine from the 3D measurement device or the imaging device as the environment information;

the AR image generation section or the free viewpoint image generation section calculates the risk of the work machine excavating below the work machine based on the distance;

the free viewpoint image generation section switches the viewpoint of the free viewpoint image to include at least the side of the work machine and the descending surface when the risk exceeds the threshold;

along with this, the AR image generation section generates the AR image in which the drawing attributes of the region of the descending surface are changed to be displayed more prominently than other parts.

**16.** The operation support system for assisting the operation of a work machine comprising:

the image generation device according to claim 1, and a display device for displaying the image generated by the image generation device.

# FIG. 1

# FIG. 2

# FIG. 3

FIG. 4

FIG. 5

communication device — 104

103

image compression section — 1036

image superimposition section — 1035

AR image generation section — 1034

coordinate system processing section — 1031

figure position shape calculation section — 1032

S1～S3

imaging device

3D measurement device

vehicle sensor

# FIG. 6

305

306     3051     3052     3053     304

| communication device | → | image expansion section | → | information addition/display switching section | → | display control section | → | display |

303

| input device | → | information addition/display switching section |

# FIG. 7

START

↓

acquire correction information
for aligning the coordinate systems for each sensor   S11

↓

calculate the free viewpoint image
using the coordinate system correction information   S12

↓

calculate the position, shape of the image
using the coordinate system correction information   S13

↓

generate an AR image on the free viewpoint image   S14

↓

superimpose the actual image and the AR image   S15

↓

compress the superimposed image   S16

↓

END

# FIG. 8

```
        ┌─────────┐
        │  START  │
        └─────────┘
             │
             ▼
┌──────────────────────────────────────────┐
│       acquire correction information       │──S11
│  for aligning the coordinate systems for each sensor │
└──────────────────────────────────────────┘
             │
             ▼
┌──────────────────────────────────────────┐
│     calculate the position, shape of the image      │──S13
│  using the coordinate system correction information │
└──────────────────────────────────────────┘
             │
             ▼
┌──────────────────────────────────────────┐
│  generate an AR image on the free viewpoint image  │──S14
└──────────────────────────────────────────┘
             │
             ▼
┌──────────────────────────────────────────┐
│    superimpose the actual image and the AR image    │──S15
└──────────────────────────────────────────┘
             │
             ▼
┌──────────────────────────────────────────┐
│        compress the superimposed image        │──S16
└──────────────────────────────────────────┘
             │
             ▼
        ┌─────────┐
        │   END   │
        └─────────┘
```

# FIG. 9

# FIG. 10

$$Q = [Q_1, Q_2, Q_3, \dots, Q_N]$$

$$q = [q_1, q_2, q_3, \dots, q_N]$$

# FIG. 11

$\theta = 0$

1101

$+d\theta$

1102

$+d\theta$

1103

1104

+θ

102

# FIG. 12

LiDAR acquisition information

camera acquisition information

$(x_{img}, y_{img})$

$(x_L, y_L, z_L)$

$(x_c, y_c, z_c)$

$(x_s, y_s, z_s)$

LiDAR coordinate system

camera coordinate system

car coordinate system

image coordinate system

# FIG. 13

# FIG. 14

# FIG. 15

# FIG. 16

# FIG. 17

FIG. 18

FIG. 19

FIG. 20

# FIG. 21

# FIG. 22

## FIG. 23

2301
111
112
113
2302

## FIG. 24

111
112
2401
113
2402
L0

# FIG. 25

imaging device

3D measurement device

vehicle sensor

103

coordinate system processing section — 1031

free viewpoint image generation section — 1033

image superimposition section — 1035

image compression section — 1036

communication device — 104

AR image generation section — 1034

figure position shape calculation section — 1032

switching determination section — 1037

EP 4 589 082 A1

# FIG. 26

imaging device — coordinate system processing section (1031) — image switching section — image superimposition section (1035) — image compression section (1036) — communication device (104)

3D measurement device

vehicle sensor

figure position shape calculation section (1032)

AR image generation section (1034)

switching determination section (1037)

103

EP 4 589 082 A1

33

# FIG. 27

# FIG. 28

EP 4 589 082 A1

## FIG. 29

# FIG. 30

EP 4 589 082 A1

## FIG. 31

EP 4 589 082 A1

# FIG. 32

OR

312

321

311

322

103

image generation

imaging device

3D information acquisition device

vehicle sensor

## INTERNATIONAL SEARCH REPORT

| International application No. |
| --- |
| **PCT/JP2023/032447** |

**A. CLASSIFICATION OF SUBJECT MATTER**

*E02F 9/26*(2006.01)i
FI: E02F9/26 B

According to International Patent Classification (IPC) or to both national classification and IPC

**B. FIELDS SEARCHED**

Minimum documentation searched (classification system followed by classification symbols)

E02F9/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021/010489 A1 (SUMITOMO (SHI) CONSTRUCTION MACHINERY CO., LTD.) 21 January 2021 (2021-01-21)<br>entire text, all drawings | 1-16 |
| A | WO 2022/070720 A1 (KOMATSU LTD.) 07 April 2022 (2022-04-07)<br>entire text, all drawings | 1-16 |
| A | JP 2019-054464 A (KOMATSU LTD.) 04 April 2019 (2019-04-04)<br>entire text, all drawings | 1-16 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/032447**

| Patent document cited in search report | | | Publication date (day/month/year) | Patent family member(s) | | | Publication date (day/month/year) |
|---|---|---|---|---|---|---|---|
| WO | 2021/010489 | A1 | 21 January 2021 | US | 2022/0136215 | A1 | |
| | | | | entire text, all drawings | | | |
| | | | | EP | 4001513 | A1 | |
| | | | | CN | 114080481 | A | |
| | | | | KR | 10-2022-0035091 | A | |
| WO | 2022/070720 | A1 | 07 April 2022 | (Family: none) | | | |
| JP | 2019-054464 | A | 04 April 2019 | US | 2020/0240110 | A1 | |
| | | | | entire text, all drawings | | | |
| | | | | CA | 3052129 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019054464 A